Europäisches Patentamt

European Patent Office

Office européen des brevets

(11) Veröffentlichungsnummer: **0 012 870**
**B1**

# EUROPÄISCHE PATENTSCHRIFT

(45) Veröffentlichungstag der Patentschrift:
**25.08.82**

(21) Anmeldenummer: **79104771.5**

㉒ Anmeldetag **29.11.79**

�IntCl.³: **A 61 C 1/18,** A 61 C 1/10,
A 61 C 1/12

(54) **Zahnärztliche Handstückanordnung.**

㉚ Priorität **22.12.78 DE 2855720**

(43) Veröffentlichungstag der Anmeldung:
**09.07.80 Patentblatt 80/14**

(45) Bekanntmachung des Hinweises auf die Patenterteilung:
**25.08.82 Patentblatt 82/34**

(84) Benannte Vertragsstaaten:
**AT CH FR GB IT**

(56) Entgegenhaltungen:
**DE-C-519 472**
**DE-C-622 785**
**DE-C-682 765**
**DE-C-743 770**
**DE-C-838 938**
**DE-C-890 118**
**FR-A-1 068 328**

(73) Patentinhaber: **SIEMENS AKTIENGESELLSCHAFT**
**Berlin und München, Postfach 22 02 61,**
**D-8000 München 22 (DE)**

(72) Erfinder: **Straihammer, Reinhard, In der Hollerhecke 10,**
**D-6141 Einhausen (DE)**
Erfinder: **Schuss, Werner, In der Lahrbach 18,**
**D-6148 Heppenheim (DE)**

Zahnärztliche Handstückanordnung

Die Erfindung bezieht sich auf eine zahnärztliche Handstückanordnung mit einem Antriebsteil und einem an diesem lösbar gehalterten, ein Kopfteil aufweisenden Handstückteil, mit durch Triebzahnräder miteinander verbundenen Triebwellenabschnitten zum Antrieb eines im Kopfteil drehbar zu halternden Werkzeuges, sowie mit einem im Bereich der Eingriffstelle von zwei Triebzahnrädern angeordneten Schwenklager, welches zwei benachbarte Gehäuseabschnitte der Handstückanordnung gelenkig miteinander verbindet, dergestalt, daß sie unter Beibehaltung des Zahneingriffs ihrer Triebwellenabschnitte aus einer ersten Stellung in wenigstens eine weitere Schwenkstellung mit davon abweichendem Neigungswinkel ihrer Achsen zueinander verstellbar sind.

Bei zahnärztlichen Handstücken unterscheidet man zwischen sogenannten geraden Handstücken und Winkelhandstücken. Verlaufen bei geraden Handstücken die Triebwellenabschnitte vom Antriebsteil bis zum angetriebenen Werkzeug fluchtend oder achsparallel zur Antriebswelle, so sind die Triebwellenabschnitte bei Winkelhandstücken im vorderen Bereich des Handstückes (Halsteil) unter einem Winkel von etwa 18 bis 21° zur Antriebsachse geneigt angeordnet. Darüber hinaus ist der im Kopfteil gelagerte Triebwellenabschnitt bei Winkelhandstücken meist noch senkrecht zum Triebwellenabschnitt des Halsteiles angeordnet.

Für Präparationsarbeiten braucht der Arzt sowohl gerade als auch Winkelhandstücke. Aus DE-C-519 472, 622 765 und 838 938 sind zwar verschiedene Konstruktionen bekannt, um Winkelhandstücke in gerade Handstücke umstellen zu können. Teilweise betrifft diese Umstellung jedoch nur den Neigungswinkel vom Antrieb zum Halsteil, nicht aber das Auswechseln des Kopfteils. Bei jenen Konstruktionen, bei denen sowohl das Halsteil in seiner Neigungslage verändert als auch das Kopfteil ausgewechselt werden kann (z. B. DE-C-838 938), ist eine Umstellung relativ umständlich; es erfordert wenigstens zwei Arbeitsgänge. Zunächst ist der Neigungswinkel zu ändern; in einem weiteren Schritt muß dann noch das Kopfteil ausgewechselt werden. Abgesehen von dieser relativ umständlichen Handhabung, genügt ein solches Handstück auch nicht den heute gestellten Forderungen, die Handstückoberfläche möglichst glatt zu gestalten, d. h. außen mit möglichst wenigen Lager- und Trennstellen zu versehen.

Ein weiterer Gesichtspunkt ist, daß, nachdem Winkelhandstücke derzeitiger Technik auch noch mit verschiedenen Getriebestufungen benötigt werden, das bisherige Angebot an solchen Handstücken relativ hohe Investitionen für den Kunden erforderlich macht. Hinzu kommt ein erhöhter Verschleiß der Handstückteile, wenn man berücksichtigt, daß die Handstücke sehr häufig vom Antriebsteil an- und abgekuppelt werden müssen und daß es heute üblich ist, die am Kopfteil benötigten Kühlmittel inkorporiert, d. h. innerhalb von Antriebsteil und Handstück, zu führen und daß dazu entsprechende Kupplungs- und Dichtungsteile an der Übergangsseite von Antriebsteil und Handstück notwendig sind, die beim An- und Abkuppeln einem erhöhten Verschleiß unterliegen.

Aufgabe der vorliegenden Erfindung ist es, eine demgegenüber verbesserte zahnärztliche Handstückanordnung anzugeben, insbesondere mit dem Ziel, dem Kunden die Benutzung gerader und Winkelhandstücke sowohl von der Investition als auch von der Gebrauchstechnik her gesehen zu erleichtern, den Verschleiß der vorhandenen Kupplungs- und Dichtungsteile im Bereich der Drehkupplung von Antriebsteil und Handstück, die durch das ständige An- und Abkuppeln der Teile bei bisherigen Lösungen einer erhöhten Beanspruchung unterliegen, zu reduzieren und darüber hinaus den Forderungen nach einer glatten Gestaltung der Oberfläche mit möglichst wenig Trenn- und Lagerstellen sowie einer problemlosen Sterilisierbarkeit von Kopf- und Hals- und dem benachbarten Griffteil des Handstückes nachzukommen.

Die gestellte Aufgabe wird bei einer zahnärztlichen Handstückanordnung der eingangs genannten Art gemäß der Erifndung dadurch gelöst, daß das Kopfteil mit einer Außenhülle versehen ist, welche beide Gehäuseabschnitte übergreift und daß die Hülse durch eine entsprechende Formgebung ihrer Innenwandung die beiden Gehäuseabschnitte in der einen oder anderen Schwenkstellung zueinander fixiert.

Wesentliche Vorzüge der erfindungsgemäßen Lösung sind, daß ein Umstellen der Handstückform in einem Arbeitsgang durch bloßes Umstecken der Hülsen mit daran befestigtem Kopfteil erfolgen kann, daß durch die übergreifende Hülse nur eine Trennstelle vorhanden ist, die Oberfläche somit weitgehend glatt ausgebildet sein kann, und daß fertigungstechnisch relativ aufwendige Teile des Handstückes, wie Getriebeteile und Kühlmittelleitungsabschnitte mit den dazugehörigen Kupplungs- und Dichtungselementen, für die verschiedenen Schwenkstellungen, die vorteilhafterweise in der einen Stellung ein gerades und in der anderen Stellung ein Winkelhandstück bilden, nur einemal vorhanden zu sein brauchen. Es braucht lediglich das entsprechende Kopfteil mit dem Winkelgetriebe oder dem gerade durchgeführten Triebwellenabschnitt mit der entsprechend ausgebildeten, die beiden Gehäuseabschnitte übergreifenden Hülse zur Fixierung der Gehäuseteile entsprechend der gewählten Schwenkstellung auf die beiden Abschnitte aufgeschoben zu werden.

Vorteilhafte Weiterbildungen und Ausgestaltungen der Erfindung sind in den Unteransprüchen enthalten.

Zwei Ausführungsbeispiele der Erfindung werden nachstehend anhand der Zeichnung näher erläutert. Es zeigen

Fig. 1 und 2 eine zahnärztliche Handstückanordnung in einer Winkelhandstückausführung und einer geraden Handstückausführung,

Fig. 3 einen Teil der in Fig. 1 dargestellten Handstückausführung im Längsschnitt,

Fig. 4 einen Querschnitt des Handstückes entlang der Linie IV/IV in Fig. 3,

Fig. 5 einen Ausschnitt der in Fig. 2 dargestellten Ausführung im Längsschnitt,

Fig. 6 einen gegenüber der Fig. 5 um 90° versetzt angeordneten Längsschnitt,

Fig. 7 ein anderes Ausführungsbeispiel der Schwenklagerung,

Fig. 8 Teile der Schwenklagerung des in Fig. 7 gezeigten Ausführungsbeispiels in schaubildlicher Darstellung.

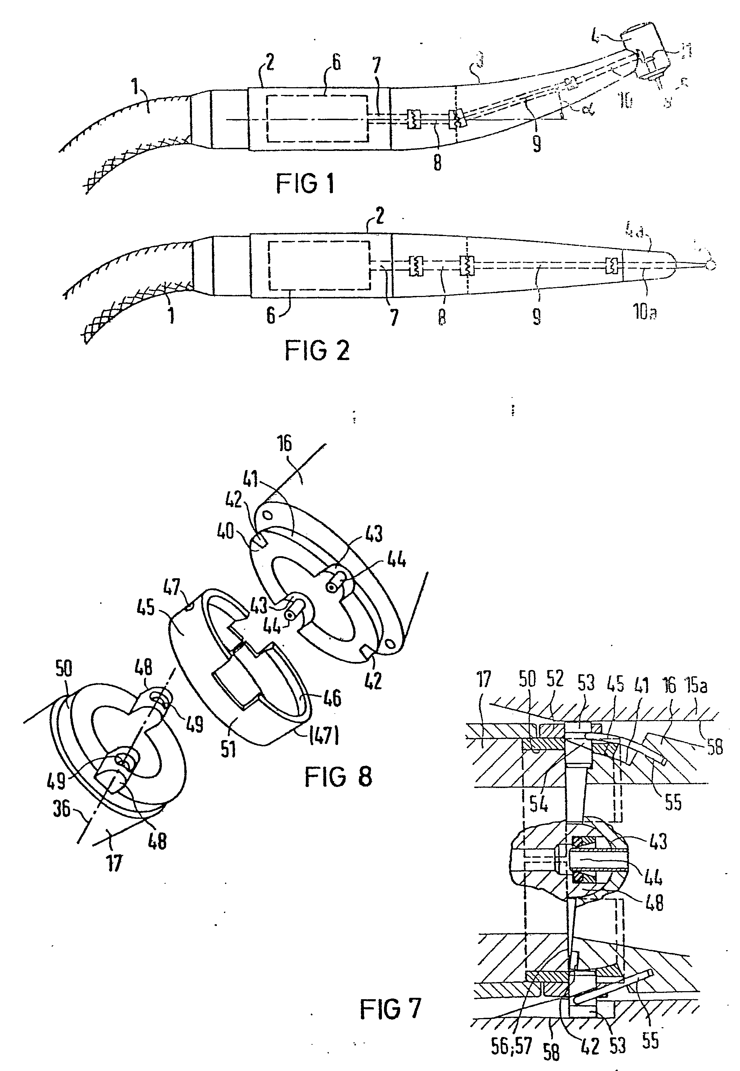

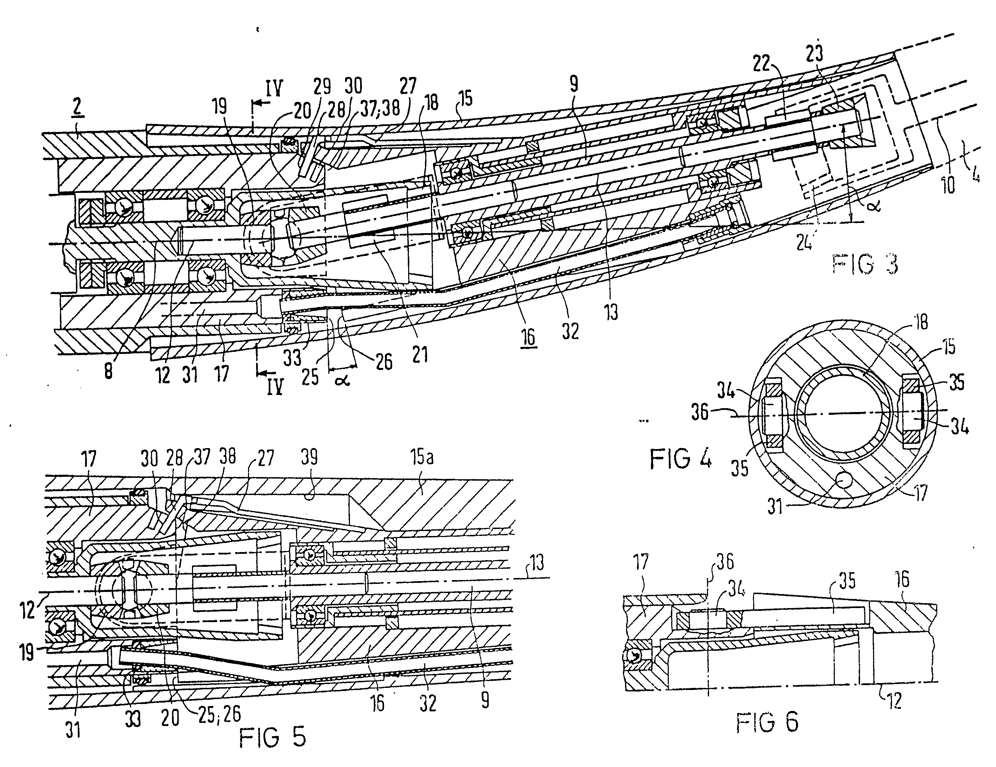

Die Fig. 1 zeigt in einer schaubildlichen vereinfachten Darstellung eine zahnärztliche Handstückanordnung mit einem an einem Versorgungsschlauch 1 angeschlossenen Antriebsteil 2, an dem sich ein Winkelhandstück 3 mit einem Kopfteil 4 anschließt, in dem ein Werkzeug 5 drehbar gelagert ist. Das Werkzeug 5 wird von einem Antriebsmotor 6 über im Inneren der Handstückanordnung 2, 3 gelagerte Triebwellenabschnitte 7 bis 11 angetrieben. Die Achsen 12, 13 (Fig. 3) der Triebwellenabschnitte 8 und 9 sind unter einem Winkel α zueinander geneigt, im Gegensatz zu der in Fig. 2 dargestellten Ausführung, bei der die Triebwellenabschnitte 9 und 10a mit den Triebwellenabschnitten 7 und 8 fluchten.

Die Fig. 3 läßt den Innenaufbau der Handstückanordnung, wie er in Fig. 1 schematisiert dargestellt ist, erkennen. Das Kopfteil 4 ist mit einer Hülse 15 versehen, die zwei Gehäuseabschnitte 16 und 17 übergreift, wobei der Gehäuseabschnitt 16 über seine gesamte Länge und der Gehäuseabschnitt 17 nur über einen Teil seiner Länge übergriffen wird. Der Gehäuseabschnitt 17 ist Bestandteil des Antriebsmotors 2 und enthält den Triebwellenabschnitt 8 mit zwei Triebzahnrädern 18, 19, von denen das mit 19 bezeichnete mit einem Teil der Verzahnung in Eingriff steht mit einem Triebzahnrad 20 des Triebwellenabschnittes 9. Der Triebwellenabschnitt 9 ist im Gehäuseabschnitt 16 längs der Achse 13 verschiebbar gelagert und ist an beiden Enden mit Zahnrädern 20, 21 bzw. 22, 23 versehen, wobei kopfteilseitig das Triebzahnrad 22 mit einem Kronenrad 24 des Triebwellenabschnittes 10 des Kopfteils 4 in Eingriff steht. Bei Verschiebung des Triebwellenabschnittes, welches durch Aufsetzen eines anderen Kopfteils (z. B. eines Kopfteils 4a, wie in Fig. 2 gezeigt) geschieht, kommen auf der einen Seite die Zahnräder 19, 20 außer und die Zahnräder 18, 21 in Eingriff und auf der anderen Seite die Zahnräder 22, 24 außer Eingriff und das Zahnrad 23 mit einem entsprechend ausgebildeten Stirnzahnrad des anderen Kopfteils (4a) in Eingriff.

Die beiden Gehäuseabschnitte 16 und 17 weisen stirnseitig Anlageflächen 25, 26 und 37, 38 auf, von denen in der gezeichneten Stellung die mit 25 und 26 bezeichneten unter dem Winkel α schräg zueinander stehen. Mit 27 ist eine im Gehäuseabschnitt 16 befestigte gespreizte Blattfeder bezeichnet, in der ein abgebogener Rastfinger 28 kippbar gelagert ist, der in eine von zwei Nuten 29, 30 eingreift. Mit 31 und 32 sind zwei Kühlmittelleitungsabschnitte bezeichnet, die durch eine elastische O-Ring-Verbindung 33 miteinander verbunden sind.

Der Gehäuseabschnitt 16 ist gegen den Gehäuseabschnitt 17 schwenkbar angeordnet; die entsprechende Schwenklagerung ist in den Fig. 4 und 6 dargestellt. Der Gehäuseabschnitt 17 weist beidseitig Zapfen 34 auf, die in am Gehäuseabschnitt 16 fest angeordneten schmalen Lagerbändern 35 gelagert sind (Fig. 6). Aufgrund der Zapfenlagerung kann der Gehäuseabschnitt 16, wie später noch erläutert wird, um die Lagerachse 36 um den Winkel α geschwenkt werden. In der in Fig. 3 dargestellten Ausführung ist der Gehäuseabschnitt 16 mittels der Blattfeder 27 in der gewünschten Winkelstellung gegenüber dem Gehäuseabschnitt 17 fixiert. Die über die beiden Gehäuseabschnitte 16 und 17 aufgeschobene Hülse 15, welche das Kopfteil 4 trägt, drückt mit ihrer Innenwand den Rastfinger 28 der Blattfeder 27 in die Nut 29. In dieser Stellung liegen die zwei oberhalb der Achse 36 einander gegenüberstehenden Stirnflächen 37, 38 formschlüssig aneinander. Der Zahneingriff der Triebzahnräder 19, 20 ist so exakt gewährleistet.

Wird die Hülse 15 mit dem Kopfteil 4 axial von den beiden Gehäuseabschnitten 16 und 17 abgezogen, so schnappt der Rastfinger 28 aus der Nut 29 des Gehäuseabschnittes 17, wodurch die vorherige Rastung aufgehoben ist. Der Gehäuseabschnitt 16 kann nun um die Lagerachse 36 geschwenkt werden. Soll nun aus dem vorherigen Winkelhandstück ein gerades Handstück geschaffen werden, so braucht lediglich, wie in Fig. 5 dargestellt, eine zweite Hülse 15a mit einem geraden Kopfteil 4a (Fig. 2) auf den nunmehr geradegestellten Gehäuseabschnitt 16 aufgeschoben zu werden. Entsprechende Führungsflächen 39 in der Hülse 15a drücken die Blattfeder 27 mit dem abgebogenen Endteil 28 in die Nut 30 ein. Das Handstück ist nunmehr in der geraden Stellung, in der die Triebwellenachsen 12 und 13 miteinander fluchten, fixiert. In dieser Stellung sind dann auch die beiden Triebzahnräder 19 und 20 exakt in Eingriff, und zwar so, daß sämtliche Zähne der Verzahnung miteinander in Eingriff stehen. Als definierter Anschlag dienen die in Fig. 3 bereits erwähnten stirnseitigen Flächen 25, 26, die in der geraden Stellung formschlüssig aneinander anliegen.

Die Verbindung der Leitungsenden der Kühlmittelabschnitte 31, 32 erfolgt mittels einer Steckkupplung 33 mit elastischen Dichtungselementen, die so ausgebildet ist, daß die Schwenkbewegung ohne Beeinträchtigung der Dichtung ausgeführt werden kann.

Die Fig. 7 und 8 zeigen ein weiteres Ausführungsbeispiel einer Schwenkverbindung der beiden Gehäuseabschnitte 16 und 17. Der Gehäuseabschnitt 16 weist bei diesem Ausführungsbeispiel stirnseitig einen Ansatz 40 mit einer kugelkalottenförmigen Oberfläche 41 auf und enthält zwei radial sich erstreckende Ausnehmungen 42 sowie in einem rechten Winkel dazu zwei weitere Ausnehmungen 43, in denen Kühlmittelleitungsrohre 44 angeordnet sind. Dem Ansatz 40 ist ein geschlitzter und dadurch federnder Haltering 45 zugeordnet, der eine zu der kugelkalottenförmigen Oberfläche 41 passende Innenfläche 46 aufweist. Der Haltering 45 enthält ferner zwei Bohrungen 47, die bei aufgeschobenem Ring zu den Ausnehmungen 42 des Abschnittes 16 passen. Der Gehäuseabschnitt 17 enthält beidseitig zwei zu den Ausnehmungen 43 passende und als Widerlager dienende Vorsprünge 48 mit entsprechenden Bohrungen 49 für die Aufnahme der Leitungsenden der Kühlmittelleitungsrohrenden 44. Gegenüber dem Außendurchmesser des Gehäuseabschnittes 17 und der Außenfläche der Widerlager 48 zurückgesetzt ist ein Bund 50, über den im montierten Zustand die andere Seite des Halteringes 45 mit einem Abschnitt 51 greift (vgl. Fig. 7). Zur Montage der Schwenklagerung wird zunächst der Haltering 45 über die kalottenförmige Oberfläche 41 geschoben. Sodann wird der Ring 45 mit dem Abschnitt 51 hinter die beiden Vorsprünge 48 geschoben, bis der Ring auf dem Bund 50 aufliegt. Nun wird mittels eines zweiten Ringes 52 (Fig. 1) beidseitig ein Bolzen 53 durch die Bohrung 47 des Halteringes 45 in die Ausnehmung 42 geführt. Der Bolzen 53 enthält Querausnehmungen 54, in die ein im Gehäuseabschnitt 16 befestigter Federdraht 55 eingreift. Der Federdraht 55 versucht, den Bolzen 53 radial nach außen zu drücken. Die gleiche Anordnung ist um 180° versetzt und auf der anderen Seite angeordnet. In der in Fig. 7 gezeichneten Schwenkstellung der beiden Gehäuseabschnitte 16 und 17, die der Fig. 2 oder Fig. 5 entspricht, liegen zwei stirnseitig miteinander korrespondierende Gehäuseflächen 56, 57 der beiden Gehäuseabschnitte 16 und 17 aneinander. Eine Fixierung der beiden Gehäuseabschnitte zueinander ist dabei über die Ringe 52 und 45 durch den Bolzen 53 gegeben. Zum besseren Ausgleich von Fertigungstoleranzen und Einstellen des Axialspiels der beiden Gehäuseabschnitte ist der Ring 45 vorteilhafterweise auf dem Teil 17 aufgeschraubt.

Wird die Hülse 15a, die zusammen mit dem Kopfteil 4a ein gerades Handstück bildet, von den beiden Gehäuseabschnitten abgezogen, so drückt der Federdraht 55 den Bolzen 53 radial so weit nach außen, bis er in der in Fig. 7 unten gezeigten Stellung zu liegen kommt. Der Gehäuseabschnitt 16 ist dann in den Lagern 48, 43 um die Lagerachse 36 (Fig. 8) schwenkbar.

Wird der Gehäuseabschnitt 16 bezüglich des Abschnittes 17 so ausgerichtet, daß die Achsen 12, 13 im Winkel ι zueinander stehen, so kommt der obere Bolzen 52 außen auf der Kalottenoberfläche 41 zu liegen, dagegen greift der untere Bolzen 52 nunmehr in die im Ansatz 40 angeordnete Nut 42 ein. Eine Fixierung der Lage erfolgt, wie bei der Ausführungsform nach den Fig. 2 und 5, durch eine entsprechende Gestaltung der inneren Kontur 58 der Hülse 15a, die auch die Eintauchtiefe des Bolzens in der gewünschten Stellung bestimmt.

Ein wesentlicher Vorteil der erfindungsgemäßen Lösung ist, daß sowohl eine gerade als auch eine winkelförmige Handstückgestaltung mit ein und denselben Triebwellenabschnitten, Kühlmittelleitungsabschnitten und zugehörigen Dichtungselementen, Lagern usw. realisiert werden kann. Der Arzt braucht demnach nur ein einziges Basisteil mit den Gehäuseabschnitten 16 und 17, über das er lediglich, je nachdem, ob er ein gerades oder ein Winkelhandstück haben möchte, ein entsprechendes Kopfteil mit einer Führungshülse überzuschieben braucht. Der Triebwellenabschnitt 8 mit dem Gehäuseabschnitt 17 ist vorteilhafterweise Bestandteil des Antriebsmotors 2.

**Patentansprüche**

1. Zahnärztliche Handstückanordnung mit einem Antriebsteil (2) und einem an diesem lösbar gehalterten, ein Kopfteil (4) aufweisenden Handstückteil (3), mit durch Triebzahnräder (19, 20, 22, 23) miteinander verbundenen Triebwellenabschnitten (7 bis 10) zum Antrieb eines im Kopfteil (4) drehbar zu halternden Werkzeuges (5), sowie mit einem im Bereich der Eingriffstelle von zwei Triebzahnrädern (19, 20) angeordneten Schwenklager, welches zwei benachbarte Gehäuseabschnitte (16, 17) der Handstückanordnung gelenkig miteinander verbindet, dergestalt, daß sie unter Beibehaltung des Zahneingriffs ihrer Triebwellenabschnitte (8, 9) aus einer ersten Stellung in wenigstens eine weitere Schwenkstellung mit davon abweichendem Neigungswinkel (α) ihrer Achsen (12, 13) zueinander verstellbar sind, dadurch gekennzeichnet, daß das Kopfteil (4) mit einer Außenhülse (15, 15a) versehen ist, welche beide Gehäuseabschnitte (16, 17) übergreift und daß die Hülse (15, 15a) durch eine entsprechende Formgebung ihrer Innenwandung (39, 58) die beiden Gehäuseabschnitte (16, 17) in der einen oder anderen Schwenkstellung zueinander fixiert.

2. Zahnärztliche Handstückanordnung nach Anspruch 1, dadurch gekennzeichnet, daß an der Hülse (15, 15a) oder an den beiden Gehäuseabschnitten (16, 17) Rastmittel (27 bis 30) vorhanden sind, die die Gehäuseabschnitte (16, 17) in den Schwenkstellungen halten.

3. Zahnärztliche Handstückanordnung nach Anspruch 1 und 2, dadurch gekennzeichnet, daß durch die Innenkonturen der Hülse (15, 15a) eine Zwangsführung der Gehäuseabschnitte (16, 17) und Ausrichtung ihrer Triebwellenabschnitte (8, 9) in die eine (Fig. 1, 3) oder andere (Fig. 2, 5) Schwenkstellung gegeben ist und mit dem Auf- und Abziehen der Hülse (15, 15a) auf die bzw. von den Gehäuseabschnitte(n) die Rastmittel (27 bis 30) betätigt werden.

4. Zahnärztliche Handstückanordnung nach einem der Ansprüche 1 bis 3, dadurch gekennzeichnet, daß der eine Gehäuseabschnitt (16) stirnseitig eine Anlagefläche (26) aufweist, gegen die eine Gegenfläche (25) des anderen Gehäuseabschnittes (17) in der einen oder anderen Schwenkstellung anliegt.

5. Zahnärztliche Handstückanordnung nach einem der Ansprüche 2 bis 4, dadurch gekennzeichnet, daß der eine Gehäuseabschnitt (16) mittels einer Zapfenlagerung (34, 35) am anderen Gehäuseabschnitt (17) schwenkbar gelagert ist, und zur Rastung ein in eine Nut (29, 30) eingreifender federbelasteter Rastfinger (28) vorgesehen ist.

6. Zahnärztliche Handstückanordnung nach Anspruch 5, dadurch gekennzeichnet, daß der Rastfinger (28) Teil einer aufgespreizten Blattfeder (27) ist.

7. Zahnärztliche Handstückanordnung nach einem der Ansprüche 1 bis 3, dadurch gekennzeichnet, daß der eine Gehäuseabschnitt (16) einen Ansatz (40) mit einer kugelkalottenförmigen Oberfläche (41) aufweist, über den ein mit dem anderen Gehäuseabschnitt (17) verbindbarer, vorzugsweise auf diesen aufschraubbarer Haltering (45) mit einer dazu passenden Innenfläche (46) greift, und daß eine federbelastete Bolzenverbindung mit zwei diametral einander gegenüberliegenden, radial bewegbaren Bolzen (53) vorhanden ist, welche durch den Ring (45) in Nute (42) des einen Gehäuseabschnittes (16) greifen und so die beiden Gehäuseabschnitte (16, 17) alternativ in der einen oder anderen Schwenkstellung definiert fixieren.

8. Zahnärztliche Handstückanordnung nach Anspruch 7, dadurch gekennzeichnet, daß die Bolzen (53) in einem auf den Haltering (45) aufgesetzten Führungsring (52) radial geführt sind und mittels Federelemente (55) radial nach außen gegen die Hülse (15) gedrückt werden.

9. Zahnärztliche Handstückanordnung nach Anspruch 8, dadurch gekennzeichnet, daß die Hülse (15a) Führungsflächen (58) für die Bolzen (53) enthält, die in Abhängigkeit vom aufgesetzten Kopfteil (4, 4a) den einen Bolzen in die Nut (42) und den anderen mittels eines Federdrahtes (55) od. dgl. aus der Nut (42) drücken.

10. Zahnärztliche Handstückanordnung nach einem der Ansprüche 7 bis 9, dadurch gekennzeichnet, daß das Schwenklager gebildet ist aus zwei diametral einander gegenüberliegenden Vorsprüngen (48) mit stirnseitigen Flächen und zwei am anderen Gehäuseabschnitt (16) angeordneten Ausnehmungen (43), an denen sie anliegen, und daß in den Vorsprüngen (48) und Ausnehmungen (43) die Leitungsenden von Kühlmittelleitungsabschnitten (31, 32) in Form einer Steckkupplung (49/44) mit elastischen Dichtungselementen (33) angeordnet sind.

11. Zahnärztliche Handstückanordnung nach einem der Ansprüche 1 bis 10, dadurch gekennzeichnet, daß der eine Gehäuseabschnitt (16) mit dem darin gelagerten Triebwellenabschnitt (9) aus einer ersten Stellung (Fig. 1), in der seine Achse (13) unter einem Winkel ($\alpha$) zur Achse (12) des anderen Triebwellenabschnittes (8) angeordnet ist, in eine zweite Stellung (Fig. 2), in der die beiden Achsen (12, 13) miteinander fluchten und umgekehrt, bringbar ist.

12. Zahnärztliche Handstückanordnung nach einem der Ansprüche 1 bis 11, dadurch gekennzeichnet, daß die beiden Gehäuseabschnitte (16, 17) Bestandteil eines Antriebsteils (2) für einen Drehantrieb sind.

## Claims

1. A dentist's hand unit arrangement having a driving portion (2) and a hand unit portion (3) which is detachably secured to the driving portion and which has a head portion (4); drive shaft sections (7 to 10), which are connected to one another by driving pinions (19, 20, 22, 23), for driving a tool (5) which is to be rotatably mounted in the head portion (4); and a swivel bearing which is arranged in the region of the point of contact of two driving pinions (19, 20) and which connects two adjacent housing sections (16, 17) of the hand unit arrangement to one another in an articulated manner such that, whilst their drive shaft sections remain in meshing engagement, said housing sections can be adjusted relative to one another from a first position into at least one further swivel position with a different angle of inclination ($\alpha$) of the axes (12, 13) of the sections, characterised in that the head portion (4) is provided with an outer sleeve (15, 15a) which overlaps both housing sections (16, 17) and that the sleeve (15, 15a) secures the two housing sections (16, 17) relative to one another in one or other of the swivel positions by a corresponding shaping of its inner wall (39, 58).

2. A dentist's hand unit arrangement as claimed in Claim 1, characterised in that the sleeve (15, 15a) or the two housing sections (16, 17) are provided with locking means (27 to 30) which hold the housing sections (16, 17) in the swivel positions.

3. A dentist's hand unit arrangement as claimed in Claim 1 and 2, characterised in that by reason of the internal contours of the sleeve (15, 15a) forced guiding of the housing sections (16, 17) and alignment of their drive shaft sections (8, 9) into (Figure 1, 3) or other (Figure 2, 5) of the swivel position results and the locking means (27 to 30) are operated by placing and removing the sleeve (15, 15a) on or from the housing sections.

4. A dentist's hand unit arrangement as claimed in one of Claims 1 to 3, characterised in that the end face of the one housing section (16) has a contact surface (26) against which a counter-surface (25) of the other housing section (17) rests in the one or the other swivel position.

5. A dentist's hand unit arrangement as claimed in one of Claims 2 to 4, characterised in that the one housing section (16) is pivotably supported on the other housing section (17) by means of a pivot bearing (34, 35), and that a spring-loaded locking finger (28) which engages into a groove (29, 30) is provided for locking.

6. A dentist's hand unit arrangement as claimed in Claim 5, characterised in that the locking finger (28) forms part of an expanded leaf spring (27).

7. A dentist's hand unit arrangement as claimed in one of Claims 1 to 3, characterised in that the one housing section (16) has an attachment (40) which has a spherical cup-shaped surface (41), which is overlapped by a holding ring (45) which can be connected to the other housing section (17), (preferably screwed thereto) and which has a matching inner surface (46), and that a spring-loaded bolt connection is provided comprising two radially movable bolts (53) which are located diametrically opposite to one another and which engage through the ring (45) into grooves (42) of the one housing section (16) and thus alternatively fix the two housing sections (16, 17) in the one or the other swivel position in a definite manner.

8. A dentist's hand unit arrangement as claimed in Claim 7, characterised in that the bolts (53) are radially guided on a guide ring (52), which is placed onto the holding ring (45), and are pressed radially outwardly against the sleeve (15) by means of spring elements (55).

9. A dentist's hand unit arrangement as claimed in Claim 8, characterised in that the sleeve (15a) has guide surfaces (58) for the bolts (53), which surfaces press one bolt into the groove (42) and the other bolt out of the groove (42) by means of a spring wire (55) or the like, in dependence upon the superimposed head portion (4, 4a).

10. A dentist's hand unit arrangement as claimed in one of Claims 7 to 9, characterised in that the swivel bearing is formed from two projections (48) which lie diametrically opposite to one another and have surfaces at the front end, and two recesses (43) which are arranged on the other housing section (16) and which they adjoin, and that in the projections (48) and the recesses (43), there are arranged the ends of coolant pipeline sections (31, 32) in the form of a plug coupling (49/44) having elastic sealing elements (33).

11. A dentist's hand unit arrangement as claimed in one of Claims 1 to 10, characterised in that the one housing section (16) and the drive shaft section (9) which is located therein can be brought from a first position (Figure 1), in which the axis (13) of the drive shaft section is arranged at an angle ($\alpha$) to the axis (12) of the other drive shaft section (8), into a second position (Figure 2) in which the two axes (12, 13) are in alignment to one another, and vice versa.

12. A dentist's hand unit arrangement as claimed in one of Claims 1 to 11, characterised in that the two housing sections (16, 17) form part of a driving portion (2) for a rotary drive.

## Revendications

1. Pièce à main de dentisterie, comportant une partie motrice (2) et une partie de pièce à main (3) montée de façon amovible dans la partie motrice et pourvue d'une pièce de tête (4), ainsi que des sections d'arbres de commande (7 à 10), reliées entre elles par des pignons (19, 20, 22, 23) pour entraîner un outil (5) monté à rotation dans la pièce de tête, et un palier articulé disposé au niveau d'attaque entre deux pignons (19, 20) et reliant avec articulation de sections voisines (16, 17) du carter de la pièce à main, la réalisation étant telle que ces dernières, tout en conservant leur état d'engrènement de leurs sections d'arbres de commande (8, 9), sont susceptibles d'être déplacées l'une par rapport à l'autre d'une première position de basculement dans au moins une autre position de basculement dans laquelle les axes de ces sections font un angle ($\alpha$) entre eux, qui diffère de celui qu'ils font dans la première position, caractérisée par le fait que la pièce de tête (4) est pourvue d'une douille extérieure (15, 15a) qui s'étend sur les deux sections du carter (16, 17), et que la douille (15, 15a) fixe les deux sections du carter l'une par rapport à l'autre dans l'une ou l'autre des positions de basculement grâce à une conformation correspondante de sa paroi intérieure (39, 58).

2. Pièce à main de dentisterie selon la revendication 1, caractérisée par le fait que des moyens d'encliquetage (27 à 30) qui maintiennent les sections du carter 7) dans les positions de basculement, sont prévus sur la douille (15, 15a) ou sur les deux sections du carter (16, 17).

3. Pièce à main de dentisterie selon la revendication 1 et 2, caractérisée par le fait que les contours intérieurs de la douille (15, 15a) assurent un guidage positif des sections du carter (16, 17) et un alignement de leurs sections d'arbres de commande (8, 9) dans l'une (figures 1, 3) ou dans l'autre (figures 2, 5) des positions de basculement, le montage de la douille (15, 15a) sur la ou les sections du carter et le dégagement de cette douille de ces sections de carter actionnant des moyens d'encliquetage (27 à 30).

4. Pièce à main de centisterie selon l'une des revendications 1 à 3, caractérisée par le fait que l'une des sections du carter (16) comporte du côé frontal une surface d'appui (26) contre laquelle porte une contre-surface (25) de l'autre cection du carter (17), dans l'une ou dans l'autre des positions de basculement.

5. Pièce à main de dentisterie selon l'une des revendications 2 à 4, caractérisée par le fait que l'une des sections du carter (16) est articulée à l'aide d'un palier à tourillons (34, 35) sur l'autre section du carter (17), alors que pour l'encliquetage il est prévu un doigt d'encliquetage (28), chargé par un ressort et pénétrant dans une gorge (29, 30).

6. Pièce à main de dentisterie selon la revendication 5, caractérisée par le fait que le doigt d'encliquetage (28) est constitué par une partie d'une lame de ressort à expansion (27).

7. Pièce à main de dentisterie selon l'une des revendications 1 à 3, caractérisée par le fait que l'une des sections du carter (16) comporte un appendice (40) ayant une surface en forme de calotte sphérique (41) sur laquelle s'adapte, par une surface intérieure correspondante (46), une bague de retenue (45) qui est susceptible d'être reliée avec l'autre section de carter (17), de préférence susceptible d'être vissée sur cette dernière, et qu'il est prévu une liaison par cheville, chargée par un ressort, avec deux chevilles (53) situées diamétralement à l'opposé l'une de l'autre et mobiles en direction radiale, lesquelles chevilles (43) pénètrent à travers la bague (45) dans des gorges (42) de l'une des sections du carter (16), fixant ainsi les deux sections du carter (16, 17) alternativement et de façon déterminée dans l'une ou dans l'autre des positions de basculement.

8. Pièce à main de dentisterie selon la revendication 7, caractérisée par le fait que les chevilles (53) sont guidées radialement sur une bague de guidage (52) montée sur la bague de retenue (55), et qu'elles sont refoulées radialement vers l'extérieur, contre la douille (15), au moyen d'éléments de ressorts (55).

9. Pièce à main de dentisterie selon la revendication 8, caractérisée par le fait que la douille (15a) comporte des surfaces de guidage (58) pour les chevilles (53) qui, en fonction de la pièce de tête (4, 4a) qui est montée, refoulent une cheville dans la gorge (42) et l'autre cheville hors de la gorge (42) à l'aide d'un fil d'acier élastique (55) ou similaire.

10. Pièce à main de dentisterie selon l'une des revendications 7 à 9, caractérisée par le fait que le palier basculant est formé par deux appendices (48) situés diamétralement à l'opposé l'un de l'autre, avec des surfaces frontales et par deux encoches (43) ménagées sur l'autre section du carter (16), contre lesquelles ils prennent appui, et que dans les appendices (48) et dans les encoches (43) sont disposées les extrémités de conduite de sections de conduite (31, 32) pour le milieu de refroidissement, sous la forme d'un accouplement à enfichage (49/44) à éléments d'étanchéité élastiques (33).

11. Pièce à main de dentisterie selon l'une des revendications 1 à 10, caractérisée par le fait que l'une des sections du carter (16), avec la section d'arbre de commande (9) qui y est montée, est susceptible d'être amenée d'une première position (figure 1) dans laquelle son axe (13) fait un angle $(\alpha)$ avec l'axe (12) de l'autre section d'arbre de commande (8), dans une seconde position (figure 2) dans laquelle les deux axes (12, 13) sont alignés, et inversement.

12. Pièce à main de dentisterie selon l'une des revendications 1 à 11, caractérisée par le fait que les deux sections de carter (16, 17) sont un élément constitutif d'une partie motrice (2) pour une commande d'entraînement.

FIG 1

FIG 2

FIG 8

FIG 7

FIG 3

FIG 4

FIG 5

FIG 6

0 012 870